# EUROPÄISCHE PATENTSCHRIFT

(11) **EP 2 703 767 B1**
(45) Veröffentlichungstag und Bekanntmachung des Hinweises auf die Patenterteilung: **20.04.2016**
(21) Anmeldenummer: 13004195.7
(22) Anmeldetag: 26.08.2013
(51) Int. Cl.: F41H 5/04, F41H 5/02, B22F 3/105, B22F 5/10, B22F 7/06, C22C 1/05, B33Y 80/00, B33Y 10/00

(54) **Verfahren zur Herstellung eines Stoffverbundes für eine Panzerung sowie Panzerung**
Method for producing a fabric composite for armour and armour
Procédé de fabrication d'un matériau composite pour un blindage et blindage

(30) Priorität: 30.08.2012 DE 102012017135
(43) Veröffentlichungstag der Anmeldung: 05.03.2014
(73) Patentinhaber: Airbus Defence and Space GmbH, 85521 Ottobrunn (DE)
(72) Erfinder: Schoberth, Achim, 82024 Taufkirchen (DE); Brandl, Erhard, Dr., 85117 Eitensheim (DE); Jonke, Dietrich, 82024 Taufkirchen (DE)
(74) Vertreter: Kastel, Stefan

(56) Entgegenhaltungen:
- WO-A1-03/078158
- DE-A1-102008 038 699
- US-A1- 2010 174 392
- US-A1- 2010 291 401
- US-B1- 8 105 510

## Beschreibung

Die Erfindung betrifft ein Verfahren zur Herstellung eines Stoffverbundes für eine Panzerung, insbesondere eine metall-basierte Panzerung, sowie ein Verfahren zum Herstellen einer solchen Panzerung.

Moderne Panzerungssysteme benötigen an einer Seite, die einem Geschoss zugewandt ist, einen Bereich mit hoher Härte, um das Geschoss abzufangen und vorteilhaft zu fragmentierten, bevor es als Ganzes in die Panzerung eindringt und diese gegebenenfalls durchschlägt.

Daher wird bei modernen Verbund-Panzerungssystemen an der Außenseite häufig Keramik verwendet, um eine metallische Panzerung zu stärken, da die Keramik zumeist eine höhere Härte aufweist als das verwendete Metall. Keramik jedoch kann durch den Aufprall eines ersten Geschosses brechen und gegebenenfalls sogar abplatzen, so dass das Verbundsystem beim Auftreten eines zweiten Geschosses nicht mehr die volle Widerstandskraft entgegensetzen kann. Es ist die so genannte "Multi-Hit-Beständigkeit" nicht gegeben.

Als Alternative zur Verwendung von Keramik, die direkt in Kontakt mit dem Geschoss kommt, wurden Verbundsysteme entwickelt, in denen das keramische Material in einem metallischen Material eingebettet ist, um so ein Abplatzen zu vermeiden.

Beispielsweise beschreibt DE 39 369 91C1 das Einbringen von keramischen Materialien in Pulverform in Hohlräume einer metallischen Matrix, wobei das keramische Material explosiv verdichtet und dabei gleichzeitig mit dem metallischen Matrixmaterial verschweißt wird.

DE 602 22 268 T2 offenbart eine mehrschichtige Panzerung, bei der eine poröse Keramik von einem Metall ummantelt wird und durch Hitzebeaufschlagung das Metall in die Poren der Keramik infiltriert wird, um so einen dichten Verbund herzustellen.

In DE 10 2008 038699 A1 ist ein Verfahren zur Herstellung eines Panzerungsverbundes offenbart, bei dem ein Wabenkörper aus Metall mit keramischen oder metallischen Materialien ausgespritzt wird.

Die oben genannten Verfahren zur Herstellung von Verbund-Panzerungssystemen bieten jedoch nur beschränkte Möglichkeiten, dreidimensionale Ausgestaltungen der Panzerungssysteme herzustellen.

Aufgabe der Erfindung ist es daher, ein Verfahren zur Herstellung von Stoffverbunden für eine Panzerung vorzuschlagen, mit dem auch komplizierte dreidimensionale Formen der Panzerung realisiert werden können.

Diese Aufgabe wird mit einem Verfahren gemäß dem Anspruch 1 gelöst.

Ein Verfahren für einen modularen Aufbau einer Panzerung ist Gegenstand des Nebenanspruchs.

Vorteilhafte Ausgestaltungen der Erfindung sind Gegenstand der Unteransprüche.

Bei einem Verfahren zur Herstellung eines Stoffverbundes für eine Panzerung wird aus einem Aufbaumaterial unter Verwendung eines generativen Fertigungsverfahrens eine dreidimensionale Endgeometrie des Stoffverbundes aufgebaut, wobei ein erster Teil des Aufbaumaterials während des generativen Fertigungsverfahrens verdichtet wird und wobei ein zweiter Teil des Aufbaumaterials in einer Phase mit geringerer Dichte als der erste Teil verbleibt. Es wird ein Aufbaumaterial verwendet, das mit einem Reaktionsgas zu einem keramischen Material reagiert.

Nach dem generativen Fertigungsverfahren wird ein Reaktionsschritt durchgeführt, bei dem das Aufbaumaterial in dem zweiten Teil geringerer Dichte vorzugsweise mit einem Reaktionsgas abreagiert, um so vorteilhaft keramische Bereiche in der dreidimensionalen Endgeometrie zu bilden.

Generative Fertigungsverfahren ermöglichen generell den Aufbau von komplizierten dreidimensionalen Geometrien.

Dazu wird allgemein, wie beispielsweise in WO 2012/083922 A1 beschrieben, ein dreidimensionales Modell digital in dünne Schichten zerlegt, die entsprechenden Daten in eine Steuervorrichtung eingespeist und damit eine Wärmequelle bzw. eine Bereitstellungseinrichtung zum Bereitstellen des Aufbaumaterials gesteuert. Es wird kontinuiertlich lokal das Aufbaumaterial abgelagert, durch die bewegliche Wärmequelle aufgeschmolzen und wieder abgekühlt, sodass sich eine verfestigte Schicht bildet.

Wie aus WO 2008/125497 A1 bekannt, können mit einem solchen Verfahren auch Hochtemperaturbauteile mit komplizierten dreidimensionalen Strukturen aus Materialien mit sehr hohen Schmelzpunkten aufgebaut werden.

Daher ist es durch Verwendung eines generativen Fertigungsverfahrens auch möglich, den ersten Teil mit dichterem Aufbaumaterial und den zweiten Teil mit weniger dichtem Aufbaumaterial in einer gewünschten dreidimensionalen Positionierung zueinander anzuordnen, um daraus den Stoffverbund für die Panzerung zu bilden. Wird nun der erste Teil des Aufbaumaterials während des generativen Fertigungsverfahrens verdichtet, verbleibt das Aufbaumaterial des zweiten Teils an seinen vorbestimmten Positionen, ohne die gewünschte dreidimensionale Form zu verändern. Muss nur der erste Teil des Aufbaumaterials während des generativen Fertigungsverfahrens verdichtet werden, kann das Fertigungsverfahren schnell, effektiv und einfach durchgeführt werden. Eine mehr oder weniger starke Verdichtung erfolgt beim ALM in einem Arbeitschritt.

Durch die Verfahrensführung ist es möglich, auf eine einfache und effektive Weise komplizierte dreidimensionale Stoffverbunde für Panzerungen aufzubauen. Insbesondere können so metallische Panzerungen hergestellt werden, in denen dreidimensional angeordnete keramische Bereiche vorliegen, um so eine "Multi-Hit-Beständigkeit" der Panzerung bereitzustellen.

Vorteilhaft wird die dreidimensionale Endgeometrie aus einem pulverförmigen Aufbaumaterial aufgebaut.

Werden pulverförmige Aufbaumaterialien verwendet, ist es vorteilhaft durch übliche Applikationsverfahren möglich, diese Materialien in der gewünschten dreidimensionalen Form auf beispielsweise eine Arbeitsoberfläche aufzubringen, wo sie dann vorteilhaft bearbeitet, beispielsweise verdichtet, werden können.

Bevorzugt wird als Aufbaumaterial ein metallisches Material, insbesondere Stahl, Titan, Aluminium, Titan- und/oder Aluminiumlegierungen verwendet.

Das metallische Aufbaumaterial dient weiter bevorzugt als Keramik-Ausgangsmaterial zum Bilden keramischer Bereiche in der dreidimensionalen Endgeometrie.

Vorzugsweise wird ein Aufbaumaterial verwendet, das mit einem Reaktionsgas zu einem keramischen Material reagieren kann und dessen Aktivierungsenergie zur Reaktion mit dem Reaktionsgas vorzugsweise unterhalb der Schmelztemperatur des Aufbaumatarials liegt.

Liegt die Energie, die zum Starten der Reaktion des Aufbaumaterials mit dem Reaktionsgas benötigt wird, vorzugsweise unterhalb dessen Schmelztemperatur, kann vorteilhaft eine Reaktion durch einfaches Aufheizen der durch das generative Fertigungsverfahren hergestellten Endgeometrie auf die gewünschte Reaktionstemperatur durchgeführt werden, vorzugsweise ohne dass das Aufbaumaterial dabei schmilzt und seine gewünschte dreidimensionale Form verliert.

Besonders bevorzugt wird als Aufbaumaterial Aluminium verwendet.

Aluminium ist vorteilhaft ein günstig erhältliches und leicht handhabbares Material, das einfach in Pulverform auf eine Arbeitsoberfläche aufbringbar ist. Außerdem weisen die daraus erzeugbaren Keramiken vorteilhaft eine hohe Härte auf.

Vorzugsweise wird die Phase mit geringerer Dichte während des generativen Fertigungsverfahrens durch pulverförmiges Verbleiben des zweiten Materials oder durch zumindest teilweise Bildung einer porösen Phase aus dem pulverförmigen Aufbaumaterial gebildet. Die Phase geringerer Dichte wird vorteilhaft nachträglich in Keramik umgewandelt.

In einer möglichen Ausgestaltung des Verfahrens verbleibt das Aufbaumaterial in dem zweiten Teil während des generativen Fertigungsverfahrens unbehandelt als Pulver in der Endgeometrie. Dies ist besonders vorteilhaft, wenn ein schnelles Herstellen eines Stoffverbunds für eine Panzerung gewünscht ist.

Alternativ kann auch das Aufbaumaterial in dem zweiten Teil während des generativen Fertigungsverfahrens behandelt werden, um so statt eines Pulvers vorzugsweise eine poröse Phase zu bilden, in der zumindest Teile des Aufbaumaterials zu einem Feststoff zusammengefügt werden, wobei Porenbereiche in dem Feststoff verbleiben. Bei einem solchen Verfahren kann vorteilhaft die Stabilität der durch das generative Fertigungsverfahren hergestellten Endgeometrie verbessert werden, um so den ersten und den zweiten Teil vorteilhaft relativ zueinander sicherer zu halten.

Besonders bevorzugt werden während des generativen Fertigungsverfahrens Verbindungseinrichtungen, insbesondere Verbindungskanäle, zwischen dem zweiten Teil und einer mit der Umgebung in Kontakt stehenden Oberfläche der dreidimensionalen Endgeometrie gebildet. Die Verbindungseinrichtungen weisen nach dem generativen Fertigungsverfahren vorteilhaft ebenfalls Aufbaumaterial in geringer Dichte, d.h. in Pulverform oder als poröse Phase, auf.

Vorteilhaft wird über die Verbindungseinrichtungen wenigstens ein Reaktionsgas zum Reagieren mit dem Aufbaumaterial in dem zweiten Teil zu dem zweiten Teil geleitet.

Die Verbindungseinrichtungen ermöglichen somit vorteilhaft eine Verbindung zur Umgebung, so dass das Reaktionsgas einfach zu bevorzugt allen Bereichen, in denen sich das weniger verdichtetete Aufbaumaterial in der Endgeometrie befindet, geleitet werden kann.

Wird nun die dreidimensionale Endgeometrie vorteilhaft vor dem Zuleiten des Reaktionsgases auf eine Temperatur knapp unter dem Schmelzpunkt des Aufbaumaterials aufgeheizt und dann das Reaktionsgas vorzugsweise über die Verbindungseinrichtungen zu dem Aufbaumaterial geleitet, reagiert das Aufbaumaterial vorzugsweise in einem einfach durchzuführenden Verfahren zu einem keramischen Material ab.

Besonders bevorzugt wird ein Reaktionsgas verwendet, das mit dem Aufbaumaterial unter Volumenerhöhung des Aufbaumaterials reagiert, wobei vorzugsweise Luft mit dem darin vorteilhaft enthaltenen Reaktionsgas Sauerstoff verwendet wird.

Dadurch verkleinern oder schließen sich beim Reagieren des Aufbaumaterials mit dem Reaktionsgas vorteilhaft die Zwischenräume zwischen den Pulverteilchen bzw. die Poren in den porösen Phasen durch die Ausdehnung des Aufbaumaterials.

Luft mit einem natürlichen Anteil von typischerweise 20 % Sauerstoff ist ein vorteilhaft leicht einsetzbares und damit kostengünstiges Reaktionsgas, das beispielsweise mit Aluminium zu keramischem Aluminiumoxid abreagieren kann. Die Reaktionsführung von beispielsweise Aluminium mit Sauerstoff ist vorteilhaft leicht zu handhaben und daher für die Herstellung eines Stoffverbundes besonders vorteilhaft.

Vorzugsweise wird das Aufbaumaterial schichtweise, insbesondere in mehreren Lagen, auf eine Arbeitsoberfläche aufgebracht, wobei der erste Teil des Aufbaumaterials durch selektive Energiebeaufschlagung lokal verdichtet wird.

Die Arbeitsoberfläche kann in diesem Fall vorteilhaft absenkbar sein, sodass das Aufbaumaterial vorteilhaft in einem entstehenden Pulverbett aufgebaut wird, wie beispielsweise in US 4 863 538 oder DE 43 004 78 C1 beschrieben.

Alternativ kann das Aufbaumaterial unter gleichzeitiger Energiebeaufschlagung selektiv auf die Arbeitsoberfläche aufgetragen werden, beispielsweise durch parallele Pulverzufuhr oder das Abschmelzen von einem Draht.

Bevorzugt wird dabei das Aufbaumaterial durch selektives Aufschmelzen mittels selektiver Energiebeaufschlagung und nachfolgende Verfestigung verdichtet, wobei zur selektiven Energiebeaufschlagung vorzugsweise eine elektromagnetische oder Partikelstrahlung, mehr vorzugsweise Laserstrahlung, verwendet wird.

Eine selektive Energiebeaufschlagung des Aufbaumaterials führt vorteilhaft dazu, dass auch komplizierteste dreidimensionale Endgeometrien durch Verfestigung des Aufbaumaterials erzielt werden können. Dies ist möglich, indem das Aufbaumaterial beispielsweise in mehreren dünnen Schichten auf eine Arbeitsoberfläche aufgebracht wird, und schichtweise beispielsweise durch selektive Laser- oder Elektronenbestrahlung verdichtet wird.

Bei einer vorteilhaften Ausgestaltung zur Herstellung einer metallischen Panzerung mit integrierten Keramikbereichen werden mehrere Module bereitgestellt, die zumindest teilweise mit dem oben beschriebenen Verfahren gebildet sind, und dann zu einer Panzerung verbunden.

Besonders bevorzugt weisen diese Module an einem Basisbereich gebildete Überlappungsbereiche auf, die zumindest über eine Seite des Basisbereichs überstehen. So können mehrere Module dachschindelartig zueinander angeordnet werden.

Alternativ weisen die Module auf einer Seite einen Vorsprung und auf einer gegenüberliegenden Seite einen komplementär ausgebildeten Rücksprung auf, wobei benachbarte Module mit ihren Vorsprüngen und Rücksprüngen ineinandergreifend angeordnet werden.

Eine besonders bevorzugte metallische Panzerung mit integrierten Keramikbereichen ist erhältlich mit dem oben beschriebenen Verfahren bzw. durch den oben beschriebenen modularen Aufbau.

Im Folgenden wird die Erfindung anhand der beigefügten Zeichnungen näher erläutert. Dabei zeigt:
- Fig. 1: ein generatives Fertigungsverfahren zur Herstellung eines Stoffverbundes für eine Panzerung;
- Fig. 2: eine mit dem regenerativen Fertigungsverfahren aus Fig. 1 hergestellte dreidimensionale Endgeometrie eines Stoffverbundes, die einem Reaktionsgas ausgesetzt wird;
- Fig. 3: ein mit den in Fig. 1 und Fig. 2 gezeigten Verfahrensschritten hergestellter Stoffverbund für eine Panzerung;
- Fig. 4: eine metallische Panzerung mit integrierten Keramikbereichen;
- Fig. 5: eine modular aufgebaute Panzerung mit integrierten Keramikbereichen;
- Fig. 6: eine schematische Ansicht der Panzerung aus Fig. 5;
- Fig. 7: eine Schnittansicht durch die Panzerung aus Fig. 6 entlang der Linie A-A;

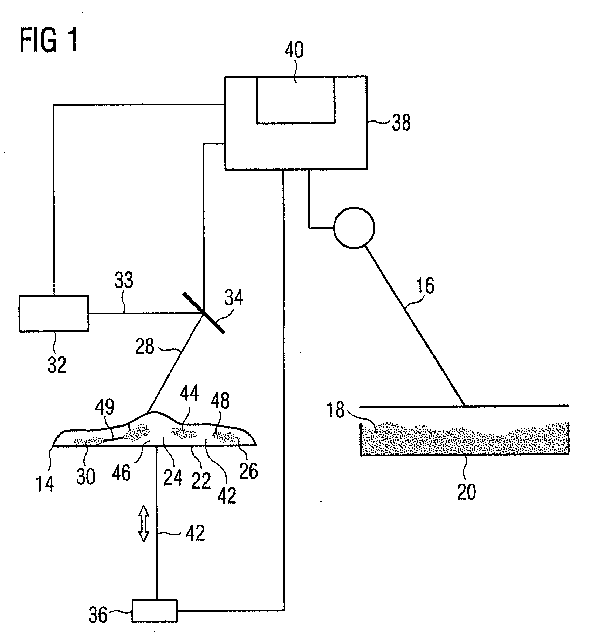

Fig. 1 zeigt einen ersten Schritt bei einem Verfahren zum Herstellen eines Stoffverbundes 10 für eine Panzerung 12.

Bei diesem ersten Schritt wird eine dreidimensionale Endgeometrie 14 des Stoffverbundes 10 mit einem generativen Fertigungsverfahren hergestellt.

Dazu wird mit Hilfe einer Applikationseinrichtung 16 pulverförmiges Material 18 aus einer Vorratseinrichtung 20 schichtweise auf eine Arbeitsoberfläche 22 aufgebracht. Das pulverförmige Material 18 bildet das Aufbaumaterial 23 für die dreidimensionale Endgeometrie 14.

Nachdem das pulverförmige Material 18 auf die Arbeitsoberfläche 22 aufgetragen ist, wird selektiv bestrahlt, so dass das pulverförmige Material 18 an vorbestimmten Stellen verdichtet wird, indem es lokal schmilzt. Dabei bildet sich an diesen vorbestimmten Stellen ein erster Teil 24 des Aufbaumaterials 23. Im nicht bestrahlten Bereich bildet sich ein zweiter Teil 26 des Aufbaumaterials 23, das dort in seiner Pulverform belassen wird. Alternativ kann durch geringere Bestrahlung der zweite Teil 26 auch zumindest teilweise zu porösen Phasen 30 verdichtet werden.

Ein Laser 32, der einen Laserstrahl 33 aussendet, eine Ablenkeinrichtung 34, die den Laserstrahl 33 auf selektiv vorbestimmte Bereiche auf der Arbeitsoberfläche 22 lenkt, die Applikationseinrichtung 16, sowie die Arbeitsoberfläche 22, die über eine Bewegungseinrichtung 36 in ihrer Höhe verstellbar ist, werden über eine Steuereinrichtung 38 angesteuert, um so ein vollautomatisches generatives Fertigungsverfahren zum Aufbau der dreidimensionalen Endgeometrie 14 zu ermöglichen.

In der Steuereinrichtung 38 ist eine Speichereinheit 40 vorgesehen, in der die gewünschte dreidimensionale Endgeometrie 14 gespeichert ist.

Durch das in Fig. 1 gezeigte generative Fertigungsverfahren wird die dreidimensionale Endgeometrie 14 so erzeugt, dass das belichtete Aufbaumaterial 23 in dem ersten Teil 24 in eine verdichtete Phase 42 und in dem weniger stark oder gar nicht belichteten zweiten Teil 26 in eine Phase mit geringerer Dichte 44 überführt wird.

Bei dem in Fig. 1 gezeigten generativen Fertigungsverfahren wird als Aufbaumaterial 23 ein metallisches Material 46 verwendet, das als Keramik-Ausgangsmaterial 48 dienen kann.

Während des generativen Fertigungsverfahren werden Verbindungseinrichtungen 49 in der dreidimensionalen Endgeometrie 14 erzeugt, die Phasen mit geringer Dichte 44 mit der Umgebung der dreidimensionalen Endgeometrie 14 verbinden. Die Verbindungseinrichtung 49 weisen wie die Phasen mit geringer Dichte 44 ebenfalls Aufbaumaterial 23 in geringer Dichte auf, sodass die Phasen mit geringer Dichte 44 miteinander verbunden sind. Die Verbindungseinrichtungen 49 enden an einer Oberfläche der dreidimensionalen Endgeometrie 14.

In einem zweiten Schritt zur Herstellung des Stoffverbundes 10 für die Panzerung 12 wird die dreidimensionale Endgeometrie 14 in eine Kammer 50 eingebracht und über Heizelemente 52 auf eine vorbestimmten Temperatur geheizt. In der Kammer 50 befindet sich ein Reaktionsgas 54, in der vorliegenden Ausführungsform Luft 56 mit einem natürlichen Sauerstoffgehalt von ca. 20 %. Die Luft 56 wird über die Verbindungseinrichtungen 49 in die erhitzte dreidimensionale Endgeometrie 14 geleitet und gelangt zu den Phasen geringer Dichte 44, in denen sich das poröse bzw. lose Aufbaumaterial 23 befindet. Dadurch dass die dreidimensionale Endgeometrie 14 erhitzt ist, insbesondere auf eine Temperatur, die eine Reaktion des Reaktionsgases 54 mit dem Aufbaumaterial 23 ermöglicht, reagiert das Reaktionsgas 54 gemeinsam mit dem Aufbaumaterial 23 zu einem keramischen Material 58 ab.

Durch Reaktion des Reaktionsgases 54 mit dem Aufbaumaterial 23 kann die Dichte in den Phasen geringer Dichte 44 erhöht werden, so dass ein keramisches Material 58 resultiert, das diese Bereiche in dem metallischen Material 46 mehr oder weniger vollständig ausfüllt.

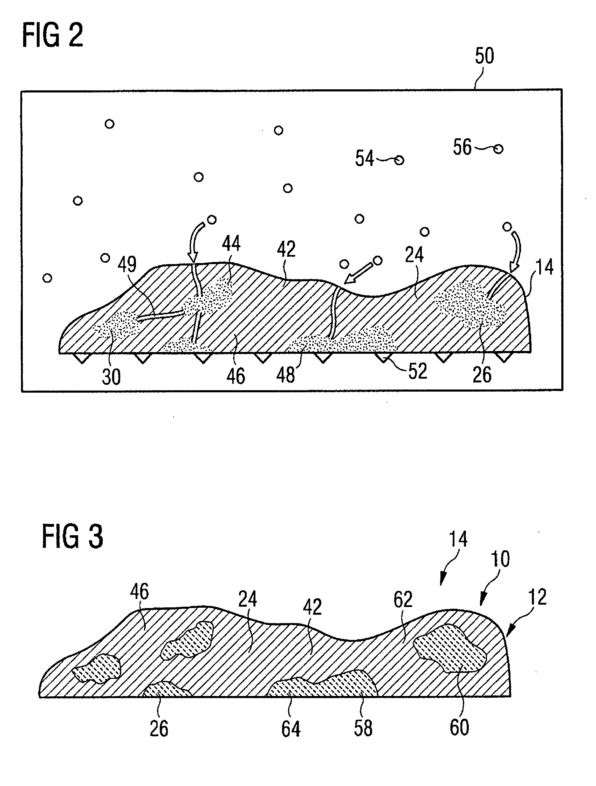

In Fig. 3 ist die resultierende dreidimensionale Endgeometrie 14 gezeigt, in der keramische Bereiche 60 in metallische Bereiche 62 eingebettet sind.

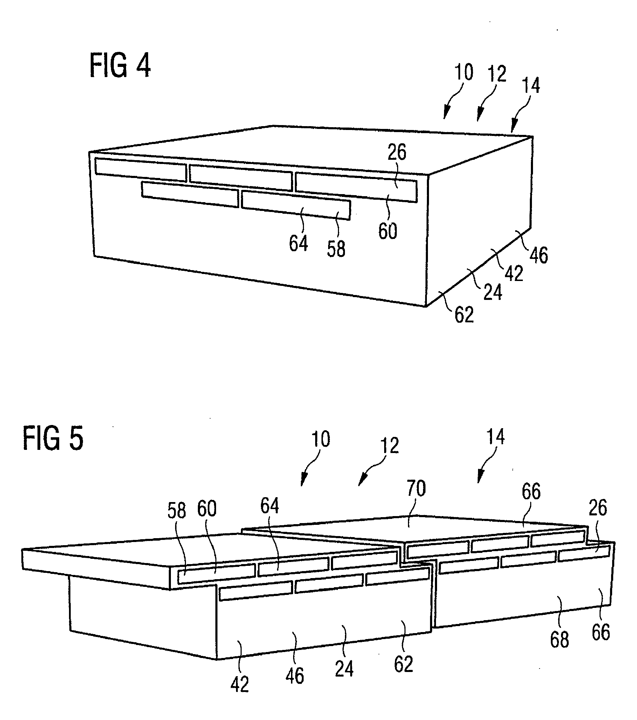

Fig. 4 zeigt eine metallische Panzerung 12 mit integrierten Keramikbereichen 64, die durch das beschriebene Verfahren hergestellt worden ist.

In Fig. 5 ist eine weitere metallische Panzerung 12 gezeigt, die unter Verwendung mehrerer Module 66 aufgebaut ist. Dabei weisen die Module 66 im oberen Bereich keramische Bereiche 60 auf. Diese keramischen Bereiche 60 sind in jeweils zwei Ebenen 68 versetzt zueinander in jedem Modul 66 angeordnet. Die obere Ebene 68 überlappt dabei seitlich einen Basisbereich 70 des Moduls 66 und lässt den Basisbereich 70 auf der anderen Seite frei. Somit ist auf der einen Seite des Moduls 66 ein Vorsprung 72 und auf der gegenüberliegenden Seite ein Rücksprung 74 gebildet. Zwei baugleiche Module 66 können somit dachschindelartig bzw. ineinander eingreifend miteinander verbunden werden.

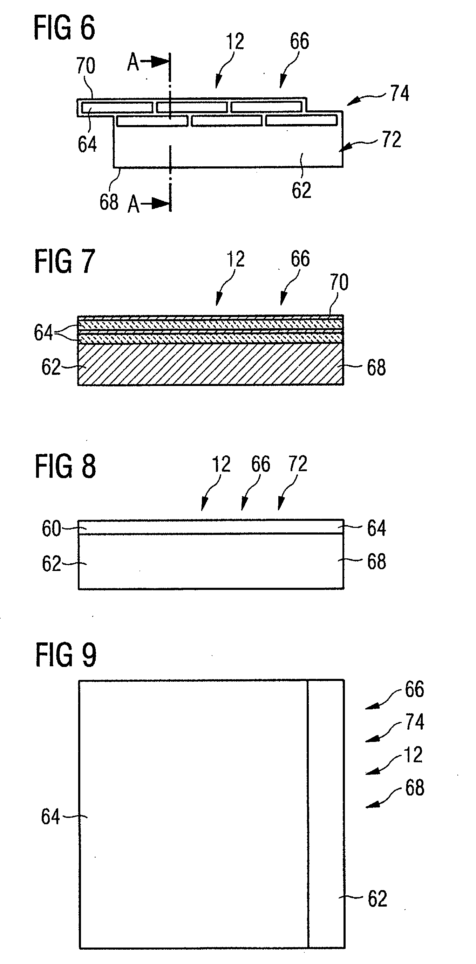

Fig. 6 zeigt eine Ansicht von vorne auf die metallische Panzerung 12 aus Fig. 5.

Fig. 7 ist eine Schnittansicht durch die Linie A-A in Fig. 6. Es ist zu sehen, dass sich durch die dachschindelartige Anordnung der keramischen Bereiche 60 auf der gesamten horizontalen Fläche der Panzerung 12 Keramikbereiche 64 befinden.

Bei modernen Verbund-Panzerungssysteme ist es vorteilhaft, wenn an einer dem Geschoss zugewandten Seite ein Bereich mit hoher Härte vorhanden ist, um das Geschoss zu fragmentierten, bevor es als Ganzes in die Panzerung 12 eindringt und diese gegebenenfalls durchschlägt. Oft wird Keramik verwendet, doch kann diese durch das erste Geschoss brechen und gegebenenfalls sogar abplatzen und somit bei einem zweiten Geschoss nicht mehr die volle Wirksamkeit entfalten. Die so genannte "Multi-Hit-Beständigkeit" ist somit nicht gegeben.

Bekannte Systeme sind in der Regel plattenförmig mit einer Keramikabdeckung zur Geschossfragmentierung, einer duktilen Metallplatte zur Absorption der Energie der Fragmente, dem so genannten "backing", und einem elastischen, reissfesten Fasergewebe als so genanntem "spall liner" zum Auffangen möglicher Splitter ausgestattet. Diese Systeme können nur einfache dreidimensionale Formen annehmen, was bei Anwendungen mit bedingtem Bauraum nachteilig ist. Alternativen sind beispielsweise dreidimensional aufgespritzte Keramiken, wie in DE 10 2008 038699 A1 offenbart. Bei dem in DE 602 222 68 T2 beschriebenen Verfahren wird ein Abplatzen der Keramik durch Einguss vermieden. In DE 393 6991 C1 wird ein Verfahren beschrieben, bei dem Keramikpulver in Rohren explosiv verdichtet wird.

Eine metallische Panzerung 12 wird über generative Verfahren aufgebaut. Die späteren Metallbereiche 62 werden dicht ausgeführt, die späteren inneren Keramikbereiche 64 werden porös ausgeführt oder verbleiben als Pulver im Bauteil. Bei einer Ausgestaltung der Erfindung sind sie aber untereinander und mit der Oberfläche verbunden. Nach Erreichen der vorgesehenen Panzerungsgeometrie werden z.B. bei erhöhter Temperatur, jedoch vorzugsweise unterhalb des Metall-Schmelzpunktes, geeignete Reaktionsgase 54 eingeleitet, die das Metall im porösen Bereich in harte Keramik umwandeln, beispielsweise gemäß der Gleichung 4 Al + 3 O₂ → 2 Al₂O₃. Kommt es dabei zu einer Volumenerhöhung, führt dies zu einer Verdichtung des Keramikbereiches 64.

Mit dem beschriebenen Verfahren sind sehr komplexe dreidimensionale Panzerungsstrukturen möglich, wobei gezielt einstellbare innenliegende Keramikbereiche 64 mit ebenfalls komplexer Geometrie erzeugt werden können. Dabei sind verschiedene Metalle verwendbar, wie beispielsweise Stahl, Titan- oder Aluminiumlegierungen. Durch den Aufbau ist eine Multi-Hit-Beständigkeit gegeben. Weiter sind auch modulare Bauweisen mit Anpassungen an geometrische Gegebenheiten möglich.

Die beschriebene Panzerung 12 kann beispielsweise für eine dreidimensionale Pilotensitzpanzerung verwendet werden.

Durch generativ hergestellte metallische Panzerungen 12 mit integrierten Keramikbereichen 64 können Panzerungen 12 mit gezielt einstellbaren innenliegenden Keramikbereichen 12 hergestellt werden, oder alternativ gemäß dem Schindelprinzip auch dreidimensionale Panzerstrukturen in modularer Bauweise.

### Bezugszeichenliste

- 10: Stoffverbund
- 12: Panzerung
- 14: dreidimensionale Endgeometrie
- 16: Applikationseinrichtung
- 18: pulverförmiges Material
- 20: Vorratseinrichtung
- 22: Arbeitsoberfläche
- 23: Aufbaumaterial
- 24: erster Teil
- 26: zweiter Teil
- 30: poröse Phase
- 32: Laser
- 33: Laserstrahl
- 34: Ablenkeinrichtung
- 36: Bewegungseinrichtung
- 38: Steuereinrichtung
- 40: Speichereinheit
- 42: verdichtete Phase
- 44: Phase geringer Dichte
- 46: metallisches Material
- 48: Keramik-Ausgangsmaterial
- 49: Verbindungseinrichtung
- 50: Kammer
- 52: Heizelement
- 54: Reaktionsgas
- 56: Luft
- 58: keramisches Material
- 60: keramischer Bereich
- 62: metallischer Bereich
- 64: Keramikbereich
- 66: Modul
- 68: Ebene
- 70: Basisbereich
- 72: Vorsprung
- 74: Rücksprung

## Patentansprüche

1. Verfahren zur Herstellung eines Stoffverbundes (10) für eine Panzerung (12), **dadurch gekennzeichnet, dass** aus einem Aufbaumaterial (23) unter Verwendung eines generativen Fertigungsverfahrens eine dreidimensionale Endgeometrie (14) des Stoffverbundes (10) aufgebaut wird, wobei ein erster Teil (24) des Aufbaumaterials (23) während des generativen Fertigungsverfahrens verdichtet wird und wobei ein zweiter Teil (26) des Aufbaumaterials (23) in der Endgeometrie (14) des Stoffverbundes (10) in einer Phase mit geringerer Dichte (44) als der erste Teil (24) verbleibt, wobei ein Aufbaumaterial (23) verwendet wird, das mit einem Reaktionsgas (54) zu einem keramischen Material (58) reagiert, wobei nach dem generativen Fertigungsverfahren ein Reaktionsschritt durchgeführt wird, in dem Aufbaumaterial (23) in dem zweiten Teil mit dem Reaktionsgas (54) reagiert, um keramische Bereiche in der Endgeometrie zu bilden.

2. Verfahren nach Anspruch 1,
**dadurch gekennzeichnet, dass** die dreidimensionale Endgeometrie (14) aus einem pulverförmigen Aufbaumaterial (23) aufgebaut wird.

3. Verfahren nach einem der Ansprüche 1 oder 2,
**dadurch gekennzeichnet, dass** als Aufbaumaterial (23) ein metallisches Material (46), insbesondere Stahl, Titan, Aluminium, Titan- und/oder Aluminiumlegierungen, verwendet wird.

4. Verfahren nach einem der Ansprüche 1 bis 3,
**dadurch gekennzeichnet, dass** die Aktivierungsenergie zur Reaktion des Aufbaumaterials (23) mit dem Reaktionsgas (54) unterhalb der Schmelztemperatur des Aufbaumaterials (23) liegt.

5. Verfahren nach einem der Ansprüche 1 bis 4,
**dadurch gekennzeichnet, dass** der zweite Teil (26) des Aufbaumaterials (23) während des generativen Fertigungsverfahrens pulverförmig verbleibt oder dass in dem zweiten Teil (26) des Aufbaumaterials (23) zumindest teilweise eine poröse Phase (30) gebildet wird.

6. Verfahren nach einem der Ansprüche 1 bis 5,
**dadurch gekennzeichnet, dass** während des generativen Fertigungsverfahrens Verbindungseinrichtungen (49), insbesondere Verbindungskanäle, zwischen dem zweiten Teil (26) des Aufbaumaterials (23) und einer mit der Umgebung in Kontakt stehenden Oberfläche der dreidimensionalen Endgeometrie (14) gebildet werden.

7. Verfahren nach Anspruch 6,
**dadurch gekennzeichnet, dass** über die Verbindungseinrichtungen (49) wenigstens ein Reaktionsgas (54) zum Reagieren mit dem zweiten Teil (26) des Aufbaumaterials (23) zu dem zweiten Teil (26) des Aufbaumaterials (23) geleitet wird.

8. Verfahren nach Anspruch 7,
**dadurch gekennzeichnet, dass** die dreidimensionale Endgeometrie (14) vor dem Zuleiten des Reaktionsgases (54) auf eine Temperatur knapp unter dem Schmelzpunkt des Aufbaumaterials (23) aufgeheizt wird.

9. Verfahren nach einem der Ansprüche 7 oder 8,
**dadurch gekennzeichnet, dass** ein Reaktionsgas (54) verwendet wird, das mit dem Aufbaumaterial (23) unter Volumenerhöhung des Aufbaumaterials (23) reagiert, wobei vorzugsweise Luft (56) verwendet wird.

10. Verfahren nach einem der Ansprüche 1 bis 9,
**dadurch gekennzeichnet, dass** das Aufbaumaterial (23) schichtweise auf eine Arbeitsoberfläche (22) aufgebracht wird, wobei der erste Teil (24) des Aufbaumaterials (23) durch selektive Energiebeaufschlagung verdichtet wird oder dass das Aufbaumaterial (23) unter gleichzeitiger Energiebeaufschlagung selektiv auf die Arbeitsoberfläche (22) aufgetragen wird.

11. Verfahren nach einem der Ansprüche 1 bis 10,
**dadurch gekennzeichnet, dass** das Aufbaumaterial (23) durch selektives Aufschmelzen mittels selektiver Energiebeaufschlagung und nachfolgende Verfestigung verdichtet wird, wobei zur selektiven Energiebeaufschlagung vorzugsweise eine elektromagnetische Strahlung, mehr vorzugsweise Laserstrahlung (33), verwendet wird.

12. Verfahren zur Herstellung einer metallischen Panzerung (12) mit integrierten Keramikbereichen (64), wobei mehrere Module (66) bereitgestellt werden, die mit einem Verfahren nach einem der Ansprüche 1 bis 11 gebildet sind, und wobei die Module (66) zu einer Panzerung (12) verbunden werden.

13. Verfahren nach Anspruch 12,
d**dadurch gekennzeichnet, dass** die Module (66) mit einen Basisbereich (70) zumindest einseitig überlappenden Keramikbereichen (64) bereitgestellt werden.

14. Verfahren nach Anspruch 12 oder 13,
**dadurch gekennzeichnet, dass** a) die Module (66) zum Bilden der Panzerung (12) dachschindelartig zueinander angeordnet werden oder b) dass die Module (66) auf einer Seite einen Vorsprung (72) und auf einer gegenüberliegenden Seite einen komplementär ausgebildeten Rücksprung (74) aufweisen, wobei benachbarte Module (66) mit ihren Vorsprüngen (72) und Rücksprüngen (74) ineinandergreifend angeordnet werden.

## Claims

1. A method for producing a material composite (10) for an armour (12),
**characterized in that** a three-dimensional final geometry (14) of the material composite (10) is built up from a build-up material (23) using a generative manufacturing method, wherein a first part (24) of the build-up material (23) is compacted during the generative manufacturing method and wherein a second part (26) of the build-up material (23) remains in the final geometry (14) of the material composite (10) in a phase with a lower density (44) than the first part (24), wherein a build-up material (23) is used which reacts with a reaction gas (54) under formation of a ceramic material (58), wherein a reaction step is carried out after the generative manufacturing method in which build-up material (23) in the second part reacts with the reaction gas (54) for forming ceramic portions in the final geometry.

2. The method according to claim 1,
**characterized in that** the three-dimensional final geometry (14) is built-up from a powdery build-up material (23).

3. The method according to one of claims 1 or 2,
**characterized in that** a metallic material (46), in particular steel, titanium, aluminum, titanium and/or aluminum alloys, is used as the build-up material (23).

4. The method according to one of claims 1 to 3,
**characterized in that** the activation energy for the reaction of the build-up material (23) with the reaction gas (54) is below the melting temperature of the build-up material (23).

5. The method according to one of claims 1 to 4,
**characterized in that** the second part (26) of the build-up material (23) remains in powder form during the generative manufacturing method and that in the second part (26) of the build-up material at least partly a porous phase (30) is formed.

6. The method according to one of claims 1 to 5,
**characterized in that** during the generative manufacturing method connecting devices (49), in particular connecting channels, are formed between the second part (26) of the build-up material (23) and a surface of the three-dimensional final geometry (14) being in contact with the surroundings.

7. The method according to claim 6,
**characterized in that** at least one reaction gas (54) for reacting with the second part (26) of the build-up material (23) is guided through the connecting devices (49) to the second part (26) of the build-up material (23).

8. The method according to claim 7,
**characterized in that** the three-dimensional final geometry (14) is heated to a temperature slightly below the melting point of the build-up material (23) before feeding the reaction gas (54).

9. The method according to one of claims 7 or 8,
**characterized in that** a reaction gas (54) is used which reacts with the build-up material (23) under increase of the volume of the build-up material (23), wherein air (56) is advantageously used.

10. The method according to one of claims 1 to 9,
**characterized in that** the build-up material (23) is applied in layers on a working surface (22), wherein the first part (24) of the build-up material (23) is compacted by a selective energy impact or that the build-up material (23) is selectively applied on the working surface (22) with simultaneous energy impact.

11. The method according to one of claims 1 to 10,
**characterized in that** the build-up material (23) is compacted by a selective melting by means of a selective energy impact and subsequent solidification, wherein an electromagnetic radiation, more preferably laser radiation (33), is used for the selective energy impact.

12. A method for producing a metallic armour (12) with integrated ceramic portions (64), wherein several modules (66) are provided, which are formed with a method according to one of claims 1 to 11 and wherein the modules (66) are connected under formation of an armour (12).

13. The method according to claim 12,
**characterized in that** the modules (66) are provided with ceramic portions (64) overlapping a base portion at least on one side.

14. The method according to claim 12 or 13,
**characterized in that** a) the modules (66) for forming the armour (12) are arranged in a roof shingle type way with respect to each other or b) that the modules (66) have a projection (72) on one side and a complementarily formed recess (74) on the opposite side, wherein adjacent modules (66) are arranged with their projections (72) and recesses (74) engaging with each other.

## Revendications

1. Procédé de fabrication d'un matériau composite (10) pour un blindage (12),
**caractérisé en ce qu'**
on construit la géométrie finale tridimensionnelle (14) du matériau composite (10), à partir d'un matériau de structure (23) et en utilisant un procédé de production génératif, une première partie (24) du matériau de structure (23) étant compactée pendant le procédé de production génératif, et une seconde partie (26) du matériau de structure (23) restant dans la géométrie finale (14) du matériau composite (10) dans une phase ayant une densité (44) inférieure à celle de la première partie (24), selon lequel on utilise un matériau de structure (23) qui réagit avec un gaz réactionnel (54) pour former un matériau céramique (58), et après le procédé de production génératif on met en oeuvre une étape de réaction lors de laquelle le matériau de structure (23) de la seconde partie réagit avec le gaz réactionnel (54) pour former des zones céramiques dans la géométrie finale.

2. Procédé conforme à la revendication 1,
**caractérisé en ce que**
la géométrie finale tridimensionnelle (14) est construite à partir d'un matériau de structure pulvérulent (23).

3. Procédé conforme à l'une des revendications 1 et 2,
**caractérisé en ce que**
en tant que matériau de structure (23) on utilise un matériau métallique (46) en particulier de l'acier, du titane, de l'aluminium, des alliages de titane et/ou d'aluminium.

4. Procédé conforme à l'une des revendications 1 à 3,
**caractérisé en ce que**
l'énergie d'activation permettant la réaction du matériau de structure (23) avec le gaz réactionnel (54) est située au-dessous de la température de fusion du matériau de structure (23).

5. Procédé conforme à l'une des revendications 1 à 4,
**caractérisé en ce que**
la seconde partie (26) du matériau de structure (23) reste à l'état pulvérulent pendant le procédé de production génératif, ou, dans la seconde partie (26) du matériau de structure (23) est formée au moins partiellement une phase poreuse (30).

6. Procédé conforme à l'une des revendications 1 à 5,
**caractérisé en ce que**
pendant le procédé de production génératif, des dispositifs de liaison (49) en particulier des canaux de liaison sont formés entre la seconde partie (26) du matériau de structure (23) et une surface de la géométrie finale tridimensionnelle (14) en contact avec l'environnement.

7. Procédé conforme à la revendication 6,
**caractérisé en ce qu'**
au moins un gaz réactionnel (54) destiné à réagir avec la seconde partie (26) du matériau de structure (23) est transféré par l'intermédiaire des dispositifs de liaison (49) vers cette seconde partie (26) du matériau de structure (23).

8. Procédé conforme à la revendication 7,
**caractérisé en ce que**
la géométrie finale tridimensionnelle (14) est chauffée avant le transfert du gaz réactionnel (54) à une température située juste au dessous du point de fusion du matériau de structure (23).

9. Procédé conforme à l'une des revendications 7 et 8,
**caractérisé en ce que**
l'on utilise un gaz réactionnel (54) qui réagit avec le matériau de structure (23) en produisant une augmentation de volume de ce matériau de structure (23), de l'air (56) étant de préférence utilisé.

10. Procédé conforme à l'une des revendications 1 à 9,
**caractérisé en ce que**
le matériau de structure (23) est appliqué par couches sur une surface de travail (22), la première partie (24) du matériau de structure (23) étant compactée par apport sélectif d'énergie ou le matériau de structure (23) est appliqué sélectivement sur la surface de travail (22) avec apport simultané d'énergie.

11. Procédé conforme à l'une des revendications 1 à 10,
**caractérisé en ce que**
le matériau de structure (23) est compacté par fusion sélective par apport sélectif d'énergie suivie d'un durcissement, et pour l'apport sélectif d'énergie on utilise de préférence un rayonnement électromagnétique et de façon plus préférentielle, un rayonnement laser (33).

12. Procédé de fabrication d'un blindage métallique (12) dans lequel sont intégrées des zones céramiques (64) selon lequel on se procure plusieurs modules (66) qui sont formés par la mise en oeuvre d'un procédé conforme à l'une des revendications 1 à 11, ces modules (66) étant liés pour obtenir un blindage (12).

13. Procédé conforme à la revendication 12,
**caractérisé en ce que**
les modules (66) comprennent des zones céramiques (64) recouvrant au moins d'un côté une zone de base (70).

14. Procédé conforme à la revendication 12 ou 13,
**caractérisé en ce que**
a) les modules (66) sont montés à la manière de bardeaux les uns par rapport aux autres pour former le blindage (12) ou
b) les modules (66) comportent sur une face une saillie (72) et sur une face opposée à celle-ci une cavité complémentaire, les modules (66) voisins venant en prise les uns dans les autres par leurs saillies (72) et leurs cavités (74).
